Europäisches Patentamt

European Patent Office

Office européen des brevets

(19)

(11) Numéro de publication: **0 477 111 B1**

(12) **FASCICULE DE BREVET EUROPEEN**

(45) Date de publication de fascicule du brevet: **21.06.95**

(51) Int. Cl.⁶: **C08L 53/00**, C08L 25/02, C08L 23/02

(21) Numéro de dépôt: **91420314.6**

(22) Date de dépôt: **05.09.91**

(54) **Revêtements à base d'élastomères thermo-plastiques, notamment revêtements de sols.**

(30) Priorité: **19.09.90 FR 9011775**

(43) Date de publication de la demande:
**25.03.92 Bulletin 92/13**

(45) Mention de la délivrance du brevet:
**21.06.95 Bulletin 95/25**

(84) Etats contractants désignés:
**AT BE CH DE DK ES FR GB GR IT LI LU NL SE**

(56) Documents cités:
DE-A- 2 843 987
FR-A- 2 352 027

**PATENT ABSTRACTS OF JAPAN, vol. 4, no. 178 (C-34)[660], 10 décembre 1980; & JP-A-55 116 741**

(73) Titulaire: **GERFLOR SA**
**50 Cours de la République**
**F-69100 Villeurbanne (FR)**

(72) Inventeur: **Boudry, Jean-Michel**
**8 Ouai Docteur C. Tzelepoglou**
**F-07700 Bourg-Saint-Andeol (FR)**
Inventeur: **Finaz, Gilles**
**70 rue Vendôme**
**F-69006 Lyon (FR)**
Inventeur: **Gagnaire, Bernard**
**1 Avenue Paul Faure**
**F-26130 Saint-Paul-Trois-Chateaux (FR)**
Inventeur: **Trinh, Cu-Cong**
**20 B Montée de la Soeur Vially**
**F-69300 Caluire (FR)**

(74) Mandataire: **Guerre, Dominique et al**
**Cabinet Germain et Maureau**
**20 Boulevard Eugène Deruelle**
**BP 3011**
**F-69392 Lyon Cédex 03 (FR)**

## Description

La présente invention concerne les revêtements du type revêtements de sol, à usage domestique, commercial, ou industriel, notamment en intérieur, appliqués sur différentes surfaces, principalement des sols. Ces revêtements sont destinés à être uses sur leur surface extérieure, sous l'action de différents agents, dont le piétinement des personnes. Ces revêtements, plats et relativement souples, peuvent se présenter en pratique, sous forme continue, en bande, feuille, rouleau ou disconstinue, sous forme d'éléments séparés, par exemple des dalles. Ces revêtements sont en général collés sur la surface qu'ils sont destinés à protéger.

Jusqu'à présent, la grande majorité de ces revêtements, disponible dans le commerce, comprend une matrice homogène à base de PVC (polychlorure de vinyle). Comme on le sait, l'usage du PVC est de plus en plus menacé ou critiqué, en raison du chlore dégagé lors de sa combustion, par exemple lors de son élimination par incinération ou combustion à l'air libre. Par conséquent, même si le PVC apporte dans son application aux revêtements de sol un excellent compromis mécanique, acoustique, et d'isolation thermique, les fabricants de ces revêtements lui ont recherché un substitut répondant à la triple préoccupation suivante :

- ne dégager aucun gaz toxique lors de sa combustion, tel que du chlore, acide chlorhydrique, brome, acide bromhydrique, dioxyde de soufre, oxydes d'azotes
- présenter ces propriétés, notamment mécaniques, du même ordre que celles obtenues aujourd'hui avec le PVC
- pouvoir être ouvré ou fabriqué avec les matériels existants, notamment par extrusion et calandrage

Aussi, selon le document DE-A-3 306 776, on a proposé un revêtement de sol comprenant à titre de matrice, un polymère de base combinant un EVA (copolymère de l'éthylène avec l'acétate de vinyle), et un EPR ou EPDM (copolymère de l'éthylène avec le propylène), une charge, et tout additif approprié, tel qu'un plastifiant.

Selon le document EP-A-0 321 760, on a proposé un revêtement de sol du même type que précédemment, comprenant une matrice à base d'EVA, minoritaire en proportion pondérale, et une charge, incluant les additifs appropriés, majoritaire en proportion pondérale, étant alors observé que l'EVA joue en outre le rôle d'un plastifiant, les agents plastifiants usuels, dont les propriétés sont en général néfastes pour la qualité finale du revêtement de sol, pouvant ainsi être éliminés.

Il a été mis en évidence que des revêtements à base d'EVA, tels que décrits et proposés précédemment, présentaient en surface des propriétés mécaniques insuffisantes, notamment tenue à la rayure et résistance à l'abrasion, tout en étant difficilement transformables ou ouvrables sur les matériels actuels, notamment par calandrage.

Conformément au document FR-A-2 352 057, pour obtenir des feuilles d'étanchéité pour le bâtiment, substituables à un revêtement du type bitume ou goudron, on a proposé et décrit un matériau plastique plat et souple comprenant :
- de 33 à 95 % en poids d'un élastomère thermo-plastique, par exemple un SBS
- de 5 à 33 % en poids d'un polyéthylène chloro-sulfoné
- divers autres ingrédients, tels que plastifiant, agent anti-friction, stabilisant, colorant
- une matière minérale de remplissage, telle que silicate, magnésie.

De tels matériaux apparaissent inadaptés, en tant que tels, pour obtenir des revêtements de sol, car en particulier ils présentent une stabilité dimensionnelle insuffisante. De plus, leur combustion dégage des gaz toxiques tels que dioxyde de soufre et chlore, ce qui est contraire à la préoccupation de la présente invention.

Conformément au document JP-A-62 11747, on a décrit un matériau plastique plat et souple, consistant en un film thermo-soudable, comprenant :
- de 10 à 80 % en poids d'un polystyrène ou SBS
- de 5 à 50 % en poids d'un copolymère éthylène-acrylate de méthyle
- de 5 à 50 % en poids d'un SBS, ayant une teneur en styrène de 10 à 50 %.

Un tel matériau sans charge, du type film, dont par conséquent l'épaisseur est comprise entre 20 et 200 $\mu$m, n'a rien à voir avec un matériau du type revêtement de sol, dont l'épaisseur est comprise environ entre 6/10è de mm et 2 à 3 mm, avec par exemple une densité surfacique de l'ordre de 3 kg/m$^2$. La composition d'un tel matériau ne saurait être étendue à celle d'un revêtement de sol, où en particulier une charge de renforcement contribuant à la stabilité dimensionnelle du matériau final doit être apportée.

Des observations comparables peuvent être faîtes en ce qui concerne le document DE-A-2 843 947, qui lui aussi décrit un film thermo-soudable. Dans l'un de ses modes d'exécution, ce document décrit un matériau plastique comprenant :

2

- moins de 50 % en poids d'un élastomère thermo-plastique, par exemple SBS contenant de 10 à 50 % en poids de styrène
- moins de 70 % en poids d'un élastomère styrénique, par exemple SBS contenant de 50 à 95 % en poids de styrène
- moins de 90 % en poids d'une résine vinyle-aromatique, par exemple polystyrène
- de 2,5 à 50 % en poids d'un polymère oléfinique, par exemple copolymère éthylène-acrylate d'alkyle.

Dans le cas des documents JP-A-62 11747 et DE-A-2 843 947, la présence d'un copolymère éthylène-acrylate d'alkyle apparaît indispensable pour conférer un pouvoir collant au film thermo-soudable.

Conformément au document JP-A-55 116741, on a décrit un matériau plastique, de type rigide auto-extinguible, comprenant :

- de 68 à 90 % en poids de polystyrène
- de 1,7 a 20 % en poids d'un élastomère thermo-plastique, par exemple SBS
- de 5 à 33 % en poids d'un copolymère éthylène-vinyle-acétate
- une matière minérale résistant ou retardant l'action des flammes, telle que la magnésie, dispersée dans le polystyrène, dans une proportion pouvant aller jusqu'à 150 parties en poids, pour 100 parties en poids de la matière plastique.

Ce document ne décrit rien d'autre qu'un polystyrène modifié, à différentes fins de transformation, telles que moulage. Et son enseignement n'apporte rien à l'homme de métier des revêtements de sol, pour satisfaire sa préoccupation identifiée précédemment, à savoir trouver un matériau plastique, plat et souple, sans combustion toxique, pouvant être substitué aux revêtements actuels à base de PVC.

La présente invention a donc pour objet un matériau plastique, plat et souple, substituable au PVC, présentant des propriétés mécaniques compatibles avec celles requises en général pour un revêtement de sol, et pouvant être façonné avec les matériels et techniques couramment utilisés dans le domaine des revêtements de sols.

A cet égard, on rappellera que les matériaux plastiques, plats et souples, des revêtements de sol du type PVC :

- présentent une épaisseur comprise entre environ 6/10è de mm et 2 à 3 mm, avec par exemple une densité surfacique de l'ordre de 3 kg/m$^2$
- ont une bonne stabilité dimensionnelle, apportée pour l'essentiel par la charge minérale de renforcement
- présentent une dureté au-dessus de 80 Shores A
- présentent une résistance à l'abrasion inférieure à 500 mm$^3$ (Taber)
- et présentent une charge à la rupture au moins égale à 50 daN/cm$^2$.

Pour une matrice selon la présente invention, on a tout d'abord retenu un élastomère thermo-plastique styrénique, dans la proportion pondérale de 20 à 90 % de la matrice. On a alors établi que l'élastomère styrénique thermo-plastique ne pouvait convenir à lui tout seul pour l'obtention des revêtements recherchés, en raison notamment de sa rayabilité, de son abrasivité, de sa sensibilité au rayonnement UV, de son poinçonnement statique, et de sa médiocre calandrabilité.

Puis, par un protocole expérimental approprié et détaillé ci-après, on a déterminé que ce polymère de base pouvait être amendé favorablement, par l'incorporation homogène et dosée :

- d'une part, d'un polymère de renforcement, miscible dans le polymère de base, comprenant au moins un polymère styrénique, et présentant intrinsèquement de bonnes propriétés mécaniques, caractérisées par un module d'élasticité en flexion (selon la norme ASTM D790) supérieur à 2000 MPa, et ce dans la proportion pondérale de 5 à 50 % en poids de la matrice
- et d'autre part, d'un polymère d'assouplissement, miscible avec les polymères de base et de renforcement, comprenant au moins un polymère oléfinique, ledit polymère d'assouplissement présentant intrinsèquement une bonne souplesse, caractérisée par un module d'élasticité en flexion (selon la norme ASTM D790) inférieur à 100 MPa, et ce dans la proportion pondérale de 5 à 50 % en poids de la matrice.

Pour terminer, le matériau plastique selon l'invention comprend jusqu'à 300 parties en poids, préférablement entre 50 à 300 parties en poids, pour 100 parties en poids de l'alliage, d'une charge minérale de stabilité dimensionnelle (craie, talc par exemple).

De manière surprenante et inattendue, et comme montré par le protocole expérimental introduit ci-après, il a été trouvé que la matrice définie ci-dessus de manière générale présentait en outre une excellente résistance à la brûlure, telle qu'une brûlure de cigarette. Cette caractéristique apparaît tout à fait nouvelle, puisqu'à ce jour aucun autre matériau thermo-plastique, non vulcanisé, et recyclable, utilisé comme revêtement de sol, tel que PVC plastifié, EVA modifié, n'apparaît avoir d'aussi bonnes propriétés en ce qui concerne la brûlure de cigarette.

Il est bien entendu difficile d'expliquer les performances et résultats obtenus selon la présente invention. On peut toutefois avancer l'explication possible suivante.

L'élastomère thermo-plastique styrénique, par exemple un SBS (styrène-butadiène-styrène) comme indiqué ci-après, est constitué par une succession de segments souples (par exemple butadiéniques) et rigides (par exemple styréniques). Les segments souples, de nature élastomérique, confèrent normalement des propriétés élastiques à la matrice, et les segments rigides se regroupent en domaines dont la cohésion est assurée par des liaisons intermoléculaires thermolabiles. Les segments souples du polymère de base sont sans doute plastifiés par le polymère d'assouplissement, du type polymère oléfinique, tandis que les segments rigides du même polymère de base se trouvent durcis par le polymère de renforcement, du type polymère styrénique. Ce dernier joue aussi un rôle de pontage entre les différentes chaînes polymères du polymère de base. Au total, on aboutit alors à une matrice constituée de manière homogène de modules relativement rigides, reliés entre eux, dans le volume de la matrice, par des pontages élastiques. Tout ceci explique sans doute les propriétés originales obtenues selon l'invention, à la fois de dureté et de souplesse du revêtement.

Bien entendu, les propriétés spécifiques des élastomères thermo-plastiques styréniques, du type SBS, ont déjà été décrites dans la littérature, et à cet égard on peut se référer au document EP-A-0 337 282, qui décrit par exemple l'obtention de feuilles de pare-vapeur, par mélange de bitume, d'une charge d'additifs usuels, et d'un agent thermo-plastique composé de SBS et d'EVA. Mais aucun des documents examinés précédemment n'a envisagé jusqu'à présent l'utilisation d'un élastomère styrénique thermo-plastique, du type SBS, comme base ou matrice d'un revêtement de sol.

S'agissant des performances d'usage, les revêtements de sol obtenus avec les matériaux selon la présente invention satisfont en particulier aux directives pour l'agrément des revêtements de sol plastiques manufacturés de l'UEA tc, et au projet de prescription de la CEN tc 134, dont le contenu est incorporé à la présente description en tant que de besoin.

On rappelle que ces performances d'usage concernent notamment la dureté et la rigidité du revêtement, sa tenue à la rayure, à la chaise à roulettes, son module secant à 1 et 2 %, sa résistance au poinçonnement, sa résistance au déchirement, sa résistance à la rupture, sa résistance à l'abrasion, sa tenue au vieillissement, sa résistance à l'ozone, aux UV, aux huiles et solvants.

S'agissant des propriétés de bonne transformation obtenues avec un matériau selon la présente invention, celles-ci concernent en premier lieu le calandrage, en évitant en particulier que la feuille du revêtement obtenu ne colle sur les cylindres de la calandre.

Par ailleurs, et c'est important, les revêtements peuvent être obtenus avec les matériaux selon l'invention, sans incorporer un quelconque plastifiant, par exemple une huile.

La présente invention présente en outre les spécificités suivantes.

L'alliage formant la matrice du matériau selon l'invention comporte préférentiellement :
- de 30 à 70 %, ou de 30 à 90 %, en poids du polymère de base
- de 15 à 35 %, ou de 5 à 45 %, en poids du polymère de renforcement
- de 10 à 40 %, ou de 5 à 45 %, en poids du polymère d'assouplissement

Le polymère de base comporte au moins un des corps suivants, à savoir un copolymère séquencé, à structure ramifiée ou non, du styrène et d'un diène, notamment un SBS (styrène-butadiène-styrène) ou un SIS (styrène-isoprène-styrène), ou encore un copolymère séquencé du styrène et d'une alpha-oléfine, notament un SEBS (styrène-éthylène-butylène-styrène).

Préférentiellement, le polymère de base est un SBS (styrène-butadiène-styrène), à structure ramifiée, dont la teneur en styrène est comprise entre 30 et 40 % en poids dudit polymère, et préférablement présentant un poids moléculaire moyen de l'ordre de 400 000.

Les polymères styréniques décrits précédemment, largement disponibles dans le commerce, sont obtenus par catalyse anionique, en présence d'un amorceur organolithien et d'un agent de couplage.

Les élastomères thermo-plastiques styréniques utilisés se présentent sous forme de poudre, copeaux ou granules, étant entendu qu'on doit proscrire les produits étendus à l'huile. Ces élastomères sont disponibles dans le commerce sous les références suivantes, notamment :
- "Cariflex TR" et "Kraton G" de la Société SHELL
- "Finaprène" de LA Société PETROFINA
- "Europrène Sol T" de la Société ENIMONT
- "Calprène" de la Société REPSOL.

Les élastomères retenus selon la présente invention seront sélectionnés à partir des considérations suivantes :
- les ramifications augmentent la dureté et la résistance du revêtement, mais diminuent sa résistance au poinçonnement

4

- la dureté du revêtement augmente avec la proportion en styrène, mais la résilience diminue corrélativement
- la résistance à la flexion et à l'usure du revêtement augmente avec le poids moléculaire de l'élastomère

Le polymère de renforcement comporte au moins un des corps suivants, à savoir un polystyrène-cristal, un polystyrène-choc, un poly-$\alpha$ -methylstyrène, un copolymère SAN (styrène-acrylonitrile), un ASA (acrylate-styrène-acrylonitrile). Préférentiellement, le polymère de renforcement est un polystyrène-cristal, ayant un poids moléculaire moyen de l'ordre de 200 000, et un indice de fluidité compris entre 20 et 40 g/10 minutes (charge 5 kg à 200°C), selon la norme ISO R 1133.

Les polymères styréniques de renforcement, pouvant être retenus selon la présente invention, sont par exemple :
- "Gedex" de la Société ATOCHEM
- "Lacqrène" de la Société ATOCHEM
- "Pliolite" de la Société GOODYEAR

Le polymère d'assouplissement comporte préférentiellement un EVA (copolymère de l'éthylène et de l'acétate de vinyle). Par exemple, le polymère d'assouplissement est un copolymère de l'éthylène et de l'acétate de vinyle, dont la teneur en comonomère (acétate de vinyle) est comprise entre 15 et 40 %, et de préférence entre 28 et 32 %, en poids dudit polymère d'assouplissement, et présentant un indice de fluidité compris entre 1 et 3 g/10 minutes, selon la norme ISO R 1133.

Les polymères d'assouplissement pouvant être utilisés selon la présente invention, sont par exemple :
- le "Riblène DJV" de la Société ENIMONT
- l'"Evatane" de la Société ATOCHEM
- l'"Escorène Ultra" de la Société EXXON
- le "Lotryl" de la Société ATOCHEM

La charge de stabilité dimensionnelle est choisie, quant à sa nature, sa granulométrie, sa dureté, en fonction des propriétés finales désirées pour le revêtement, en particulier sa tenue à l'abrasion et sa rayabilité.

Préférentiellement, cette charge est un mélange kaolin-silice, dans la proportion pondérale comprise entre 80 : 20 et 90 : 10 :
- le kaolin ayant une surface spécifique (DIN 66131) comprise entre 10 et 15 m$^2$/g, et une dimension moyenne des particules de 5 à 7 $\mu$m
- la silice ayant une surface spécifique comprise entre 150 et 200 m$^2$/g, et une dimension moyenne des particules de 18 à 20 nm.

Mais cette charge peut être aussi un mélange hydrate d'alumine-silice, dans la proportion pondérale comprise entre 80 : 20 et 90 : 10.

Le comportement au feu (réaction au feu, opacité des fumées) des matériaux selon l'invention peut être encore renforcé par l'incorporation de charges ignifuges traditionnelles (hydrate d'alumine, hydrate de magnesium, carbonate de magnesium, borate de zinc), substituées en totalité ou en partie au kaolin dans le mélange kaolin/silice ci-dessus.

Le revêtement peut également comprendre un système usuel de stabilisation, contre la dégradation par l'oxygène, la lumière, la chaleur, l'ozone, combinant de 10 à 25 parties en poids, pour cent parties en poids de l'alliage, d'oxyde de titane, un écran UV, et un antioxydant phénolique.

Le système stabilisant avec écran peut lui-même comprendre :

| | |
|---|---|
| - dithiocarbamate | de 0, à 0,5 parties |
| - antioxydant phénolique | de 0,5 à 1 parties |
| - écran UV | de 0,3 à 0,5 parties |

Un tel système stabilisant permet d'éviter une chute des propriétés mécaniques avec le temps, un durcissement de la surface du revêtement, et l'apparition de craquelures et microfissures en réseau.

Bien entendu, on peut incoporer aux revêtements selon la présente invention, les adjuvants habituels, à savoir des lubrifiants et "processing aids", des cires, des résines améliorant la compacité du matériau, des agents de couplage, des antistatiques, des agents gonflants, et des pigments minéraux ou organiques.

Les alliages chargés selon l'invention peuvent se présenter de manière discrète, telle que grains, granulés, chips et autres particules, caractérisées en ce que chaque particule est constituée par un alliage chargé.

La présente invention est maintenant décrite et établie par référence aux exemples ci-dessous.

Conformément au tableau I ci-après, on observe tout d'abord que la diminution, voire l'absence du plastifiant (par exemple huile à caractère naphténique ou parafinique) améliore pour l'essentiel les propriétés mécaniques (dureté, module et rupture), les propriétés de surface (abrasion, rayabilité), le collage, la tenue à la décoloration, la résistance à la brûlure de cigarette, et le comportement au feu des revêtements obtenus avec des matériaux selon l'invention.

TABLEAU I

| Composition du revêtement | | | |
|---|---|---|---|
| SBS | 70 parties en poids } matrice ou alliage | | |
| PS | 30 parties en poids } | | |
| Kaolin | 150 parties en poids ) | | |
| Silice | 20 parties en poids } pour 100 parties en | | |
| Stabilisants, lubrifiants et pigments | 20 parties en poids ) en poids de la matrice ou de l'alliage | | |
| Huile naphténique | 30 | 15 | 0 |
| EVA (parties en poids pour 100 parties en poids de la matrice) | 0 | 15 | 30 |
| Propriétés du revêtement Dureté Shore (AST M 2240) | 68 ShC | 75 ShC | 82 ShC |
| Allongement rupture | 60 % | 45 % | 30 % |
| Charge rupture NFT 46002 | 50 daN/cm$^2$ | 70 daN/cm$^2$ | 95 daN/cm$^2$ |
| Produit élastique BS 3261 | 3 MJ/m$^3$ | 3,15 MJ/m$^3$ | 2,85 MJ/m$^3$ |
| Abrasion Taber Norme NFq 03-055 | 300 mm$^3$ | 150 mm$^3$ | 85 mm$^3$ |
| Rayure Scléromètre | 250 g | 400 g | 650 g |
| Décoloration aux UV Norme ISO 4892 | bleu n°4 | bleu n° 5 | bleu n° 6 |
| Collage à 23° C Collage à 70° C Norme NFT 76-126 | 0,7 daN/cm 0,8 daN/cm | 0,8 daN/cm 0,8 daN/cm | 1,5 daN/cm 1,3 daN/cm |
| Tenue cigarette prescription UEA tc D4 | pas d'altération du matériau - trace brune | pas d'altération du matériau - trace claire | pas d'altération du matériau - trace claire |

Conformément au tableau II ci-après, on observe l'effet particulièrement favorable en ce qui concerne la résistance à l'abrasion, la rayabilité et les propriétés mécaniques, obtenu avec une charge de 88 : 12 kaolin/silice.

# TABLEAU II

**Composition du revêtement**

| | | |
|---|---|---|
| SBS | 60 | parties en poids |
| PS | 20 | parties en poids } matrice ou alliage |
| EVA | 20 | parties en poids |

Stabilisants, lubrifiants et pigments  20 parties en poids  pour 100 parties en poids de la matrice ou alliage

| | | | |
|---|---|---|---|
| CHARGES | craie 170 | talc 170 | kaolin 150 silice 20 |
| **Propriétés du revêtement** Dureté shore (ASTM 2240) | 74 ShC | 77 ShC | 86 ShC |
| Allongement rupture Charge rupture NFT 46 002 Produit élastique BS 3261 | 30 % 50 daN/cm$^2$ 1,5 MJ/m$^3$ | 25 % 80 daN/cm$^2$ 2,0 MJ/m$^3$ | 20 % 120 daN/cm$^2$ 6,0 MJ/m$^3$ |
| Abrasion Taber NF q 03-055 | 150 mm$^3$ | 110 mm$^3$ | 80 mm$^3$ |
| Rayure Scléromètre | 250 g | 350 g | 650 g |
| Tenue cigarette UEA tc D4 | pas d'altération du matériau | pas d'altération du matériau | pas d'altération du matériau |

Conformément au tableau III, ci-après, on observe tout d'abord qu'une des compositions SBS-PS-EVA, d'un matériau selon l'invention présente une aptitude au calandrage, satisfaisante pour les moindres concentrations en EVA, et excellente pour les concentrations plus importantes.

A l'inverse, on observe qu'une composition de substitution du PVC, selon l'art antérieur et particulièrement riche en EVA, n'est pas calandrable sous la forme d'une feuille régulière. En outre, elle ne satisfait pas à la norme UEA tc D4 relative à la tenue à la brûlure de cigarette.

7

## TABLEAU III

| NATURE DES MATERIAUX | Compositions des matrices SBS – PS – EVA de l'invention | Composition sans PVC de l'art antérieur :<br><br>EVA        60 parties en poids<br>PP        35 "     "<br>E.P.D.M.   5 "     "<br>Craie     120 ) parties pour<br>Kaolin    50 ) 100 parties<br>Stabilisants )    ) en poids<br>Lubrifiants } 20 ) de la<br>Pigments     )   ) matrice |
|---|---|---|
| APTITUDE AU CALANDRAGE | SBS : 30 % à 70 %<br>PS  : 15 % à 45 %<br>EVA : 5 % à 20 %<br><br>Calandrage satisfaisant<br><br>SBS : 30 % à 70 %<br>PS  : 5 % à 20 %<br>EVA : 20 % à 45 %<br><br>Calandrage excellent | Mauvaise |
| TENUE CIGARETTE UEA tc D4 | – aucune altération du matériau.<br><br>– trace colorée claire | Matériau attaqué dans la masse |

Conformément au tableau IV, ci-après, on observe que pour une matière ayant une teneur constante en SBS, les concentrations relatives en polymère de renforcement et en polymère d'assouplissement ont une importance fondamentale pour l'objet de l'invention.

Lorsque la matrice contient le polymère de renforcement mais aucun polymère d'assouplissement, on obtient une feuille rigide et cassante, laquelle en outre est impropre au collage.

Inversement, lorsque la matrice contient le polymère d'assouplissement mais aucun polymère de durcissement, on obtient une feuille souple dépourvue de la cohésion nécessaire pour l'usage d'un revêtement de sol selon l'essai défini par la norme DIN 54324.

On observe en outre des caractéristiques remarquables pour un revêtement de sol, s'agissant d'un matériau thermoplastique fortement chargé, pour des rapports pondéraux polymère de renforcement/polymère d'assouplissement de 1 et 0,5 respectivement.

Le tableau IV démontre le caractère inattendu de la combinaison selon l'invention du polymère de renforcement et du polymère d'assouplissement, chacun ne contrariant pas de manière substantielle les propriétés intrinsèques de l'autre, tout en conférant pour partie ses propriétés propres à la matrice.

TABLEAU IV

COMPOSITION DU REVETEMENT

SBS     70 parties en poids
kaolin    150 parties en poids ) pour 100
silice     20 parties en poids ) parties en
                  ) poids
stabilisants, lubrifiants       ) de l'alliage
et pigments      20 parties en poids )

| | | | | | |
|---|---|---|---|---|---|
| PS ) complément à 100 % de | 60 | 40 | 30 | 20 | 0 |
| EVA) la composition de l'alliage | 0 | 20 | 30 | 40 | 60 |
| **Propriétés du revêtement** Dureté shore (ASTM 2240) | 90 ShC | 89 ShC | 82 ShC | 78 ShC | 73 ShC |
| Allongement rupture | 12 % | 20 % | 30 % | 38 % | 50 % |
| Charge à la rupture | 145 daN/cm$^2$ | 125 daN/cm$^2$ | 95 daN/cm$^2$ | 90 daN/cm$^2$ | 85 daN/cm$^2$ |
| Produit élastique (NF T46 - 002) | 1,74 MJ/m$^3$ | 2,5 MJ/m$^3$ | 2,85 MJ/m$^3$ | 3,42 MJ/m$^3$ | 4,25 MJ/m$^3$ |
| Abrasion Taber (NF Q 03 - 0055) | 91 mm$^3$ | 82 mm$^3$ | 85 mm$^3$ | 87 mm$^3$ | 87 mm$^3$ |
| Rayure scléromètre | 400 g | 650 g | 700 g | 800 g | 500 g |
| Chaise à roulettes (DIN 54324) | aucun changement d'aspect | aucun changement d'aspect | aucun changement d'aspect | déformations en surface | pas de cohésion et arrachement de matières |
| Collage à 23° C | impropre au collage | 0,8 daN/cm | 1,5 daN/cm | 1,8 daN/cm | 2,1 daN/cm |
| Collage à 70° C (NF T 76 - 126) | | 0,6 daN/cm | 1,3 daN/cm | 1,7 daN/cm | 1,9 daN/cm |
| Souplesse (UEAtc57) | feuille rigide et cassante | feuille déformable | feuille flexible et déformable | feuille flexible et déformable | feuille flexible et déformable |
| Tenue cigarette (UEAtc04) | pas d'altération du matériau | pas d'altération du matériau | pas d'altération du matériau | pas d'altération du matériau | pas d'altération du matériau |

S'agissant de leur fabrication, les matériaux selon la présente invention peuvent être obtenus selon les procédés traditionnels, de manière discontinue ou continue.

Dans le mode discontinu, les différents polymères et autres additifs peuvent être mélangés et malaxés avec des mélangeurs internes habituellement employés dans les industries du caoutchouc et des matières plastiques, et tout particulièrement les mélangeurs Farrel-Banbury. Le mélangeur est préchauffé à 80° C avant le malaxage, puis les différents composés du mélange sont introduits. Il faut 10 à 15 minutes pour atteindre une température de 160-180° C dans le malaxeur et obtenir une masse de produit homogène. On décharge alors le mélange pour le travailler sur mélangeur à cylindres, les cylindres ayant été préalablement chauffés à 130-150° C.

9

Dans le mode continu, on utilise des mélangeurs à fonctionnement continu (mélangeurs FCM, comalaxeurs Buss) qui, dans les mêmes conditions que précédemment, fournissent une bande chaude que l'on transforme en feuille appelée préforme, par passage sur mélangeur à cylindres à 130-150° C.

Un résultat particulièrement intéressant de l'invention est que le matériau homogène obtenu par mélange est transformable par calandrage. En particulier, grâce aux compositions selon l'invention, les défauts traditionnels (bulles, "sapins", rugosité de surface, retrait), liés à certaines caractéristiques des élastomères styréniques (viscosité à chaud élevée) se trouvent limités.

Divers procédés traditionnels permettent de mettre en feuilles les préformes obtenues après malaxage et homogénisation :

- le calandrage : les préformes alimentent la calandre ; après calandrage, la feuille est glacée et conditionnée en rouleaux ou en dalles
- l'extrusion : les préformes sont mises en feuilles par extrusion, grâce à une filière plate
- le laminage/pressage : les préformes sont granulées en chips ; des chips de formes et de coloris divers sont mélangés, réchauffés à 150° C dans des gélifieuses, et laminés à 90-100° C ; la feuille marbrée obtenue est découpée et pressée en discontinu
- le pressage en continu : les préformes sont granulées en chips ; des chips de formes et de coloris divers sont mélangés et déposés sur un support textile, formant un matelas de 10 mm d'épaisseur ; le matelas est pressé en continu sur une presse du type Auma (Constructeur Berkstorff en Allemagne Fédérale) ; on obtient ainsi une feuille à décor adirectionnel (épaisseur 4 mm) qui est ensuite tranchée
- le moulage : les granulés tels que décrits précédemment peuvent être mélangés à froid, associés à d'autres éléments décoratifs le cas échéant, distribués dans des moules, puis pressés à chaud, par exemple dans des presses multi-plateaux.

D'autres exemples sont exposés ci-après, à titre non limitatif, avec les compositions suivantes.

| Exemples / Ingrédients | N° 1, 3 5 et 6 | N° 2 | N° 4 |
|---|---|---|---|
| polymère de base | SBS "Cariflex TR" | SBS "Europrène Sol T" | SBS "Finaprène" |
| Polymère de renforcement | polystyrène choc "Lacqrène" | polystyrène cristal "Gedex" | polystyrène cristal "Gedex" |
| Polymère d'assouplissement | EVA "Riblène DJV" | EVA "Evatane" | EMA "Lotryl" |
| Charge | kaolin, silice oxyde de titane | kaolin, silice oxyde de titane | hydrate d'alumine, borate de zinc, silice, carbonate de magnésium oxyde de titane |

### EXEMPLE I

Dans un mélangeur Banbury-Farrel de capacité 60 l, préchauffé à 70-80° C, on introduit une première charge composée de 18 kgs de SBS (Cariflex TR), 7 kgs de polystyrène-choc (Lacqrène), 3 kgs d'EVA (Riblène DJV) et 30 kgs de kaolin, puis une seconde charge composée de 10 kgs de kaolin, 4 kgs de silice, 3 kgs d'oxyde de titane et divers additifs (stéarine, écran UV, antioxydant phénolique, pigments). Il faut une dizaine de minutes pour que le mélange atteigne une température de 170-180° C, après quoi il refroidit à 160° C sur un mélangeur à cylindres (température des cylindres : 115 et 135° C), sur lequel il est homogénéisé. Des préformes sont tirées du mélangeur (épaisseur : 3 à 4 mm) et sont ensuite granulées, en fin de ligne ; puis les chips obtenues sont tamisées. En fonction des pigments utilisés on obtient des chips de divers coloris ; en particulier dans le présent exemple :

- 600 kgs de granulés gris-pâle
- 100 kgs de granulés noirs.

Ces granulés sont mélangés à température ambiante pendant une dizaine de minutes, puis réchauffés dans des gélifieuses préchauffées à 145° C (30-35 tr/minute).

Les granulés tombent à 160° C sur le laminoir (cylindres à 45 et 50° C). On obtient alors une feuille marbrée d'épaisseur 2 mm qui est acheminée vers le système de découpe.

Les dalles obtenues sont pressées (cycle chaud = 20 minutes-170° C-150 bar ; cycle froid = 20° C-90 bar) puis stabilisées.

Les propriétés physiques et mécaniques du revêtement ainsi obtenu, sont les suivantes :

| | |
|---|---|
| - masse volumique | 1,57 g/cm$^3$ |
| - dureté | 80 Shore C (ASTM 2240) |
| - rayure scléromètre | 600 g |

- poinçonnement statique

| | |
|---|---|
| 15 secondes = 2,0/100 mm<br>90 secondes = 2,1/100 mm<br>19 minutes = 2,4/100 mm<br>2 H 30 = 2,8/100 mm | enfoncement initial (norme DIN 51 955) |
| 15 secondes = 1,9/100 mm<br>90 secondes = 1,7/100 mm<br>19 minutes = 1,3/100 mm<br>2 H 30 = 1,2/100 mm<br>24 H = 0,9/100 mm | enfoncement rémanent (norme DIN 51 955) |

| | |
|---|---|
| - chaise à roulettes > | 25000 cycles (norme DIN 54324) |
| - allongement rupture | 20 à 25 % (norme NFT 46002) |
| - charge rupture | 85 à 95 kg/cm$^2$ (NFT 46002) |
| - module 1 % | 38 kg/cm$^2$ (norme UEAtcM1) |
| - module 2 % | 51 kg/cm$^2$ (norme UEAtcM1) |
| - abrasion | 85 mm$^3$ (norme NFq03-055) |
| - tenue à la cigarette | pas d'altération du produit (norme UEATcD4) |

**EXEMPLE 2**

Dans cet exemple, on utilise un comalaxeur Buss (fonctionnement continu) de débit 1500 kg/h. On y mélange à 155-165° C :
- 300 kgs de SBS (Europrene Sol T)
- 100 kgs de polystyrène cristal (Gedex)
- 100 kgs d'EVA (Evatane)
- 800 kgs de kaolin
- 80 kgs de silice
- 50 kgs d'oxyde de titane
- divers additifs (stéarine, écran UV, antioxydant phénolique, pigment).

On obtient une bande chaude, qui alimente un mélangeur à cylindres (140-142° C), où le mélange est homogénéisé, puis une calandre en L, dont les cylindres ont été préchauffés respectivement à 140, 145, 150 et 140° C.

Des granulés, de même formulation mais d'un autre coloris, peuvent être introduits au niveau du premier bourrelet, afin de veiner la feuille calandrée.

Après calandrage, cette feuille est glacée, refroidie et stabilisée.

Les propriétés physiques et mécaniques du revêtement ainsi obtenu, sont les suivantes :

| - masse volumique | 1,56 g/cm$^3$ |
|---|---|
| - dureté | 84 Shore C (ASTM 2240) |
| - rayure scléromètre | 500 g |
| - chaise à roulettes | 25000 cycles (DIN 54324) |
| - allongement rupture | 25 % (NF T 46-002) |
| - charge rupture | 90 à 100 kg/cm$^2$ (NF T 46-002) |
| - module 1 % | 40 à 45 kg/cm$^2$ (UEAtcM1) |
| - module 2 % | 59 à 60 kg/cm$^2$ (UEAtcM1) |
| - abrasion | 80 mm$^3$ (norme Q 03-055) |
| - tenue à la cigarette | pas d'altération du produit (norme UEAtcD4) |

**EXEMPLE 3**

Le mélange de chips cité en exemple 1, soit :
- 600 kgs de granulés gris-pâles
- 100 kgs de granulés noirs

est mélangé à température ambiante pendant une dizaine de minutes, puis déposé sur un support textile pour y former un matelas d'une dizaine de mm d'épaisseur.

Le matelas est pressé en continu, entre le tambour central (170° C) et la bande métallique d'une machine AUMA, et donne un revêtement non directionnel de 4 mm d'épaisseur.

La feuille obtenue est tranchée dans son épaisseur.

**EXEMPLE 4**

On réalise dans un malaxeur Banbury-Farrel (tel que décrit dans l'exemple 1) le mélange suivant, par parties en poids :

| | | |
|---|---|---|
| – SBS Finaprène | 40 | ⎫ |
| – Polystyrène Gedex | 25 | ⎬ matrice ou alliage |
| – EMA Lotryl | 35 | ⎭ |
| – Hydrate d'alumine | 130 | ⎫ |
| – Silice | 50 | ⎪ |
| – Hydrate de magnésium | 10 | ⎪ |
| – Borate de zinc | 10 | ⎬ pour 100 parties en |
| – Carbonate de magnésium | 10 | ⎪ poids de la matrice |
| – Oxyde de titane | 10 | ⎪ ou alliage |
| – Stéarine, stabilisant et pigments | 10 | ⎭ |

Le mélange est homogénéisé sur mélangeur à cylindres, et les préformes granulées.

Des chips de divers coloris sont mélangés, réchauffés dans des gélifieuses, et laminés. La feuille obtenue est découpée, et les dalles pressées et stabilisées dans les mêmes conditions que dans l'exemple 1.

Un revêtement obtenu selon cet exemple présente en particulier les caractéristiques suivantes :
- réaction au feu (épiradiateur NF 92501) : classement M2

12

- opacité des fumées et toxicité des gaz (NFX10-702 et NFX70-100) : classement F3

Avec de telles caractéristiques, ce revêtement satisfait aux exigences rencontrées dans les législations en matière de feu, relatives au matériel roulant, aux immeubles de grande hauteur et aux locaux recevant du public. Il est notamment conforme aux normes SNCF, STM812A et RATP C22B.

## EXEMPLE 5

On mélange 150 kgs de granulés gris pâles et 25 kgs de granulés noirs (tels que formulés dans l'exemple 1), avec 2 litres d'huile plastifiante (de type Flexon ou Enerpar), auxquels on ajoute un mélange-maître constitué de :
- 300 g de noir de carbone
- 700 g de SBS en poudre (Cariflex TR)

Une fois le malaxage réalisé, et chaque granulé enrobé d'une fine couche de noir, on moule le produit en discontinu (cycle chaud = 20 minutes-180° C, cycle froid = 20 minutes-20° C, épaisseur = 2 mm).

Après stabilisation, les dalles obtenues sont poncées.

Les dalles obtenues présentent une résistance électrique transversale de $3 \times 10^4$ Ohms, et peuvent donc être classées comme conductrices, selon la norme NF P 62-001.

Suivant la quantité de noir de carbone et les conditions du procédé, il est également possible d'obtenir des dalles dites "dissipatrices", avec des résistances transversales de l'ordre de $10^6$ Ohms.

## EXEMPLE 6

Dans cet exemple, on utilise une extrudeuse de rapport L/D = 25 et de taux de compression $\tau$ = 3, munie d'une filière plate.

400 kgs de granulés gris-pâles (préparés comme dans l'exemple 1) sont mélangés à 200 kgs de granulés vulcanisés, formulés à partir d'un caoutchouc synthétique SBR.

Le mélange est extrudé à 160° C et on obtient, après extrusion, une feuille de 4 mm d'épaisseur qui, une fois tranchée, présente un décor "en incrustés" original.

## Revendications

1. Matériau plastique plat et souple, comprenant une matrice homogène comportant un élastomère thermo-plastique styrénique, dans laquelle est dispersée une charge minérale, **caractérisé en ce que** ledit matériau est un revêtement du type revêtement de sol, ne dégageant aucun gaz toxique tel qu'acide chlorhydrique lors de sa combustion, et comprend un alliage comportant en mélange :
   . de 20 à 90 % en poids d'un polymère de base comprenant au moins l'élastomère thermo-plastique styrénique
   . de 5 à 50 % en poids d'un polymère de renforcement, miscible avec le polymère de base, comprenant au moins un polymère styrénique, ledit polymère de renforcement présentant un module d'élasticité en flexion supérieur à 2000 MPa
   . de 5 à 50 % en poids d'un polymère d'assouplissement, miscible avec les polymères de base et de renforcement, comprenant au moins un polymère oléfinique, ledit polymère d'assouplissement présentant un module d'élasticité en flexion inférieur à 100 MPa
   . jusqu'à 300 parties en poids, pour 100 parties en poids de l'alliage, d'une charge minérale de stabilité dimensionnelle.

2. Matériau selon la revendication 1, caractérisé en ce qu'il comprend de 50 à 300 parties en poids, pour 100 parties en poids de l'alliage, de la charge minérale.

3. Matériau selon la revendication 1, caractérisé en ce qu'il comprend de 30 à 90 % en poids du polymère de base.

4. Matériau selon la revendication 1, caractérisé en ce qu'il comprend de 5 à 45 % en poids du polymère de renforcement.

5. Matériau selon la revendication 1, caractérisé en ce qu'il comprend de 5 à 45 % en poids du polymère d'assouplissement.

EP 0 477 111 B1

**6.** Matériau selon la revendication 1, caractérisé en ce que l'alliage comporte de 30 à 70 % en poids du polymère de base.

**7.** Matériau selon la revendication 1, caractérisé en ce que l'alliage comporte de 15 à 35 % en poids du polymère de renforcement.

**8.** Matériau selon la revendication 1, caractérisé en ce que l'alliage comporte de 10 à 40 % en poids du polymère d'assouplissement.

**9.** Matériau selon la revendication 1, caractérisé en ce que le polymère de base comporte au moins un des corps suivants, à savoir un copolymère séquencé du styrène et d'un diène, un copolymère séquencé du styrène et d'une alpha-oléfine.

**10.** Matériau selon la revendication 9, caractérisé en ce que le polymère de base est un SBS (styrène-butadiène-styrène)

**11.** Matériau selon la revendication 10, caractérisé en ce que le SBS a une structure ramifiée et une teneur en styrène comprise entre 30 et 40 % en poids.

**12.** Matériau selon la revendication 1, caractérisé en ce que le polymère de renforcement comporte au moins un des corps suivants, à savoir un polystyrène-cristal, un polystyrène-choc, un poly-$\alpha$-méthylstyrène, un terpolymère ABS (acrylonitrile-butadiène-styrène), un copolymère SAN (styrène-acrylonitrile), un ASA (acrylate-styrène-acrylonitrile).

**13.** Matériau selon la revendication 12, caractérisé en ce que le polymère de renforcement est un polystyrène-cristal dont l'indice de fluidité est compris entre 20 et 40 g/10 mn.

**14.** Matériau selon la revendication 1, caractérisé en ce que le polymère d'assouplissement comporte un EVA (copolymère de l'éthylène et de l'acétate de vinyle).

**15.** Matériau selon la revendication 14, caractérisé en ce que le polymère d'assouplissement est un copolymère de l'éthylène et de l'acétate de vinyle, dont la teneur en comonomère (acétate de vinyle) est comprise entre 15 et 40 % en poids dudit copolymère, et dont l'indice de fluidité est compris entre 1 et 3 g/10 mn.

**16.** Matériau selon la revendication 1, caractérisé en ce que la charge est un mélange kaolin-silice, dans la proportion pondérale comprise entre 80 : 20 et 90 : 10.

**17.** Matériau selon la revendication 1, caractérisé en ce que la charge est un mélange hydrate d'alumine-silice, dans la proportion pondérale comprise entre 80 : 20 et 90 : 10.

**18.** Matériau selon l'une quelconque des revendications précédentes, caractérisé en ce qu'il se présente de manière continue, sous forme de bande ou feuille, ou de manière discontinue, sous forme d'éléments séparés, de type dalles.

**19.** Matériau selon la revendication 18, présenté sous la forme d'un revêtement de sol.

**20.** Matière plastique, se présentant de manière discrète, telle que grains, granulés, chips, et autres particules, caractérisée en ce que chaque particule est constituée par un alliage chargé, identique à celui défini dans l'une quelconque des revendications 1 à 17.

**Claims**

**1.** Flat and flexible plastic material comprising a homogenous matrix containing a styrene-based thermoplastic elastomer, in which an inorganic filler is dispersed, characterized in that the said material is a covering of the floor covering type, releasing no toxic gas such as hydrochloric acid when it burns and comprises an alloy containing, mixed:

- from 20 to 90 % by weight of a base polymer comprising at least the styrene-based thermoplastic elastomer
- from 5 to 50 % by weight of a reinforcing polymer miscible with the base polymer, comprising at least one styrene-based polymer, the said reinforcing polymer exhibiting a flexural elasticity modulus higher than 2 000 MPa
- from 5 to 50 % by weight of a flexibilizing polymer miscible with the base and reinforcing polymers, comprising at least one olefin polymer, the said flexibilizing polymer exhibiting a flexural elasticity modulus lower than 100 MPa
- up to 300 parts by weight, per 100 parts by weight of the alloy, of an inorganic filler for dimensional stability.

2. Material according to Claim 1, characterized in that it comprises from 50 to 300 parts by weight, per 100 parts by weight of the alloy, of the inorganic filler.

3. Material according to Claim 1, characterized in that it comprises from 30 to 90 % by weight of the base polymer.

4. Material according to Claim 1, characterized in that it comprises from 5 to 45 % by weight of the reinforcing polymer.

5. Material according to Claim 1, characterized in that it comprises from 5 to 45 % by weight of the flexibilizing polymer.

6. Material according to Claim 1, characterized in that the alloy contains from 30 to 70 % by weight of the base polymer.

7. Material according to Claim 1, characterized in that the alloy contains from 15 to 35 % by weight of the reinforcing polymer.

8. Material according to Claim 1, characterized in that the alloy contains from 10 to 40 % by weight of the flexibilising polymer.

9. Material according to Claim 1, characterized in that the base polymer contains at least one of the following substances, namely a block copolymer of styrene and of a diene, a block copolymer of styrene and of an alpha-olefin.

10. Material according to Claim 9, characterized in that the base polymer is an SBS (styrene-butadiene-styrene).

11. Material according to Claim 10, characterized in that the SBS has a branched structure and a styrene content of between 30 and 40 % by weight.

12. Material according to Claim 1, characterized in that the reinforcing polymer contains at least one of the following substances, namely a crystal polystyrene, an impact polystyrene, a poly-$\alpha$-methylstyrene, an ABS (acrylonitrile-butadiene-styrene) terpolymer, an SAN (styrene-acrylonitrile) copolymer or an ASA (acrylate-styrene-acrylonitrile).

13. Material according to Claim 12, characterized in that the reinforcing polymer is a crystal polystyrene whose melt index is between 20 and 40 g/10 min.

14. Material according to Claim 1, characterized in that the flexibilizing polymer contains an EVA (copolymer of ethylene and vinyl acetate).

15. Material according to Claim 14, characterized in that the flexibilizing polymer is a copolymer of ethylene and vinyl acetate in which the comonomer (vinyl acetate) content is between 15 and 40 % by weight of the said copolymer and whose melt index is between 1 and 3 g/10 min.

16. Material according to Claim 1, characterized in that the filler is a kaolin-silica mixture in a weight proportion of between 80 : 20 and 90 : 10.

17. Material according to Claim 1, characterized in that the filler is an alumina hydrate-silica mixture in a weight proportion of between 80 : 20 and 90 : 10.

18. Material according to any one of the preceding claims, characterized in that it is continuous in appearance, in the form of strip or sheet, or noncontinuous, in the form of separate components of the slab type.

19. Material according to Claim 18, in the form of a floor covering.

20. Plastic substance appearing in a discrete form, such as grains, granules, chips and other particles, characterized in that each particle consists of a filled blend identical with that defined in any one of Claims 1 to 17.

**Patentansprüche**

1. Flaches und geschmeidiges Kunststoffmateriai mit einer homogenen Matrix, die ein styrolhaltiges thermoplastisches Elastomer enthält, in dem ein mineralischer Zuschlag dispergiert ist, dadurch gekennzeichnet, daß das Material ein Belag, nämlich ein Bodenbelag, ist, bei dessen Verbrennung kein toxisches Gas wie Chlorwasserstoffsäure freigesetzt wird und das eine Mischung aufweist, in der folgendes vermischt enthalten ist:
   . 20 bis 90 Gew.-% eines Basispolymers, das zumindest ein styrolhaltiges thermoplastisches Elastomer enthält,
   . 5 bis 50 Gew.-% eines mit dem Basispolymer vermischbaren Verstärkungspolymers, das zumindest ein styrolhaltiges Polymer enthält, wobei das Verstärkungspolymer ein Elastizitätsmodul bei Biegebeanspruchung größer 2.000 MPa aufweist,
   . 5 bis 50 Gew.-% eines mit dem Basis- und dem Verstärkungspolymer vermischbaren Weichmacherpolymers, das zumindest ein olefinisches Polymer enthält, wobei das Weichmacherpolymer ein Elastizitätsmodul bei Biegebeanspruchung kleiner 100 MPa aufweist, sowie
   . bis zu 300 Gewichtsanteile pro 100 Gewichtsanteile der Mischung eines formbeständigen mineralischen Zuschlages.

2. Material nach Anspruch 1, dadurch gekennzeichnet, daß es 50 bis 300 Gewichtsanteile pro 100 Gewichtsanteile der Mischung an mineralischem Zuschlag enthält.

3. Material nach Anspruch 1, dadurch gekennzeichnet, daß es 30 bis 90 Gew.-% des Basispolymers enthält.

4. Material nach Anspruch 1, dadurch gekennzeichnet, daß es 5 bis 45 Gew.-% des Verstärkungspolymers enthält.

5. Material nach Anspruch 1, dadurch gekennzeichnet, daß es 5 bis 45 Gew.-% des Weichmacherpolymers enthält.

6. Material nach Anspruch 1, dadurch gekennzeichnet, daß die Mischung 30 bis 70 Gew.-% des Basispolymers enthält.

7. Material nach Anspruch 1, dadurch gekennzeichnet, daß die Mischung 15 bis 35 Gew.-% des Verstärkungspolymers enthält.

8. Material nach Anspruch 1, dadurch gekennzeichnet, daß die Mischung 10 bis 40 Gew.-% des Weichmacherpolymers enthält.

9. Material nach Anspruch 1, dadurch gekennzeichnet, daß das Basispolymer zumindest eines der folgenden Bestandteile enthält, nämlich ein Blockcopolymer aus Styrol und einem Dien, ein Blockcopolymer aus Styrol und einem α-Olefin.

16

EP 0 477 111 B1

**10.** Material nach Anspruch 9, dadurch gekennzeichnet, daß das Basispolymer SBS (Styrol-Butadien-Styrol) ist.

**11.** Material nach Anspruch 10, dadurch gekennzeichnet, daß das SBS eine verzweigte Struktur aufweist, und daß der Styrolgehalt zwischen 30 und 40 Gew.-% beträgt.

**12.** Material nach Anspruch 1, dadurch gekennzeichnet, daß das Verstärkungspolymer zumindest eines der folgenden Bestandteile enthält, nämlich ein kristallines Polystyrol, ein schlagfestes Polystyrol, ein Poly-$\alpha$-Methylstyrol, ein terpolymeres ABS (Acrylnitril-Butadien-Styrol), ein SAN-Copolymer (Styrol-Acrylnitril), ein ASA (Acrylat-Styrol-Acrylnitril).

**13.** Material nach Anspruch 12, dadurch gekennzeichnet, daß das Verstärkungspolymer ein kristallines Polystyrol ist, dessen Schmelzindex zwischen 20 und 40 g/10 min liegt.

**14.** Material nach Anspruch 1, dadurch gekennzeichnet, daß das Weichmacherpolymer EVA (ein Copolymer von Ethylen und Vinylacetat) enthält.

**15.** Material nach Anspruch 14, dadurch gekennzeichnet, daß das Weichmacherpolymer ein Copolymer von Ethylen und Vinylacetat ist, wobei der Gehalt des Comonomers (Vinylacetat) zwischen 15 und 40 Gew.-% des Copolymers beträgt und dessen Schmelzindex zwischen 1 und 3 g/10 min liegt.

**16.** Material nach Anspruch 1, dadurch gekennzeichnet, daß der Zuschlag eine Kaolin-Siliciumdioxid-Mischung im Gewichtsverhältnis zwischen 80 : 20 und 90 : 10 ist.

**17.** Material nach Anspruch 1, dadurch gekennzeichnet, daß der Zuschlag eine Aluminiumhydroxid-Siliciumdioxid-Mischung im Gewichtsverhältnis zwischen 80 : 20 und 90 : 10 ist.

**18.** Material nach einem der vorangegangenen Ansprüche, dadurch gekennzeichnet, daß es kontinuierlich in Form eines Bandes oder einer Folie oder diskontinuierlich in Form von getrennten Elementen, nämlich Platten, vorliegt.

**19.** Material nach Anspruch 18, dadurch gekennzeichnet, daß es als Bodenbelag vorliegt.

**20.** Kunststoffmaterial in teiliger Form wie Körner, Granalien, Chips oder andere Partikel, dadurch gekennzeichnet, daß jeder Partikel aus einer mit einem Zuschlag versehenen Mischung besteht, wie sie in einem der Ansprüche 1 bis 17 definiert ist.

17